Europäisches Patentamt
European Patent Office
Office européen des brevets

(19)

(11) Veröffentlichungsnummer: **0 012 106**
**A1**

(12)

# EUROPÄISCHE PATENTANMELDUNG

(21) Anmeldenummer: 79810135.8

(22) Anmeldetag: 22.10.79

(51) Int. Cl.³: C 07 F 9/38
C 10 M 1/44, C 10 M 1/32

(30) Priorität: 26.10.78 CH 11078/78

(43) Veröffentlichungstag der Anmeldung:
11.06.80 Patentblatt 80/12

(84) Benannte Vertragsstaaten:
BE DE FR GB NL

(71) Anmelder: CIBA-GEIGY AG
Patentabteilung Postfach
CH-4002 Basel(CH)

(72) Erfinder: Schmidt, Andreas, Dr.
Hubackerweg 32
CH-4153 Reinach(CH)

(72) Erfinder: Kirchmayr, Rudolf, Dr.
Ettingerstrasse 9
CH-4147 Aesch(CH)

(54) **Ammoniumsalze der Methylphosphonsäure, ihre Herstellung, ihre Verwendung als Zusätze für Hydraulikflüssigkeiten und Hydraulikflüssigkeiten, die sie enthalten.**

(57) Verbindungen der Formel (I)

(I) 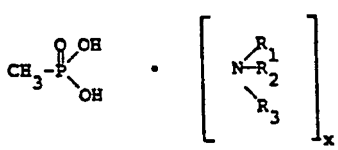

worin $R_1$ $\beta$-Hydroxyäthyl, $R_2$ und $R_3$ unabängig voneinander Wasserstoff oder $\beta$-Hydroxyäthyl und X einen Wert zwischen 1 und 2,2 bedeuten.

EP 0 012 106 A1

0012106

Case 3-12085/+

BEZEICHNUNG GEÄNDERT
siehe Titelseite

NEUE ZUSAETZE FUER HYDRAULIKFLUESSIGKEITEN

Die vorliegende Erfindung betrifft neue Ammoniumsalze der Methanphosphonsäure und deren Verwendung als Zusätze für wassermischbare Hydraulikflüssigkeiten.

Im allgemeinen werden Hydraulikflüssigkeiten verschiedene Zusatzstoffe zur Verbesserung ihrer Gebrauchseigenschaften beigegeben. Insbesondere besteht ein Bedarf an Additiven, welche die Vorrichtungen vor Reibungsabnützung schützen sollen. An solche Verschleissinhibitoren wird die Anforderung gestellt, dass sie das Lasttragevermögen der Hydraulikflüssigkeit erhöhen und nicht korrodierend auf die beteiligten Metallteile wirken.

Wirksame Zusätze sind Phosphonsäuren, bekannt aus der US-Patentschrift 3.177.144. Sie haben den Nachteil, dass sie keinen ausreichenden Korrosionsschutz und ungenügende Hochdruckeigenschaften besitzen.

Es sind nun neue Phosphonsäurederivate mit überraschend guter Hochdruckwirksamkeit und befriedigender Korrosionsschutz-Wirkung gefunden worden, die die genannten Nachteile nicht oder nicht im gleichen Mass haben.

Die vorliegende Erfindung betrifft Verbindungen der Formel (I)

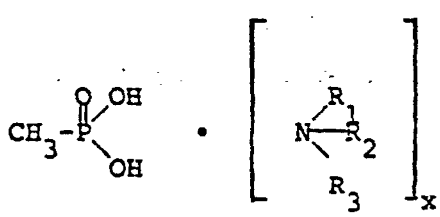

(I)

worin $R_1$ β-Hydroxyäthyl, $R_2$ und $R_3$ unabhängig voneinander Wasserstoff oder β-Hydroxyäthyl und x einen Wert zwischen 1 und 2,2 bedeuten.

Bevorzugt sind Verbindungen der Formel (I), worin $R_1$ und $R_2$ β-Hy-

0012106

droxyäthyl, $R_3$ Wasserstoff oder ß-Hydroxyäthyl bedeuten.

Bevorzugt ist x = 2.

Die Herstellung der Verbindungen der Formel (I) kann auf an sich bekannte Weise erfolgen. Am einfachsten wird Methanphosphonsäure der Formel

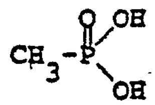

(II)

mit einem Amin der Formel

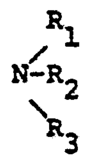

(III)

worin $R_1$, $R_2$ und $R_3$ die oben erwähnte Bedeutung haben, umgesetzt. Das Mol-Verhältnis beträgt insbesondere 1 : 1 bis 1 : 2,2. Vorteilhaft verwendet man ein Lösungsmittel, wie einen Alkohol, z.B. Aethanol, der nach erfolgter Umsetzung z.B. unter reduziertem Druck abdestilliert werden kann. Man erhält das Aminsalz als ein viskoses Oel.

Die verwendeten Ausgangsprodukte sind bekannte Verbindungen, die auf einfache Weise herstellbar sind.

Die erfindungsgemässen Verbindungen sind aufgrund ihrer das Hochdruckverhalten verbessernden und Korrosionsschutz vermittelnden Eigenschaften als Zusätze für Hydraulikflüssigkeiten auf Wasser-Glykolbasis geeignet.

Die neuen Zusätze können in Kombination mit anderen Additiven, wie Antioxidantien, Metallpassivatoren, Rostinhibitoren und anderen Verschleißschutz-Komponenten verwendet werden.

Alle Prozente sind Volumenprozente.

Die folgenden Beispiele erläutern die Erfindung.

0012106

Beispiel 1

24 g (0,2 Mol) Methanphosphonsäure werden bei 25° C in 100 ml Aethanol gelöst und unter Rühren mit 42 g (0,4 Mol) Diäthanolamin versetzt. Unter reduziertem Druck wird das Aethanol abdestilliert und man erhält so das Methanphosphonsäure-di(diäthanolamin)salz als ein helles viskoses Oel. (Additiv Nr. 1).

Beispiel 2

24 g (0,2 Mol) Methanphosphonsäure werden bei 25° C in 100 ml Aethanol gelöst und unter Rühren mit 59,7 g (0,4 Mol) Triäthanolamin versetzt. Unter reduziertem Druck wird das Aethanol abdestilliert und man erhält so das Methanphosphonsäure-di(triäthanolamin)salz als ein gelbbraunes viskoses Oel, das beim Stehen kristallisiert (Additiv Nr. 2).

Beispiel 3

Mit dem Shell-Vierkugel-Apparat (IP 239/73 Extreme pressure and wear lubricant test for oils and greases four ball-machine) wurden folgende Werte bestimmt:

1.) W.L. = Weld load (Schweisslast). Das ist die Last, bei der die 4 Kugeln innerhalb von 10 Sekunden zusammenschweissen.

2.) W.S.D. = Wear Scar Diameter in mm: Das ist der mittlere Verschleissdurchmesser bei einer Belastung von 40 kg während 10 bzw. 30 Minuten.

Als Testflüssigkeit für die Wirksamkeit der Additive wurde destilliertes Wasser, bzw. ein Gemisch von 70 % Wasser/ 20 % Monoäthylenglykol/ 10 % Polyäthylenglykol verwendet.

| Additiv | 1 % Additiv in destilliertem Wasser | | 2,5 % Additiv in Wasser/Glykol/Polyäthylenglykol | |
|---|---|---|---|---|
| | W.L. (kg) | W.S.D. 10 Min. (mm) | W.L. (kg) | W.S.D. 30 Min. (mm) |
| keines | 120 | ver-schweisst | 140 | 1,4 |
| 1 | 150 | 1,4 | 220 | 1,2 |
| 2 | 140 | 1,1 | 230 | 1,3 |

Beispiel 4

Mit der Reibverschleisswaage nach Reichert (Reichert Wear Test DBGM 1749247) wurde die Verschleisskalotte bestimmt.

Bei diesem Reibungsprüfgerät wird über ein Doppelhebelsystem eine fest eingespannte Prüfrolle an einen umlaufenden Schleifring angepresst, der mit seinem unteren Drittel in die zu prüfende Flüssigkeit taucht, deren Druckaufnahmevermögen beurteilt werden soll. Bei umlaufendem Schleifring entstehen je nach Druckaufnahmevermögen der Flüssigkeit auf der Prüfrolle Abschliffflächen (Verschleisskalotten) deren Grösse von der Tragfähigkeit des Prüfstoffes abhängt.

Prüfbedingungen des Gerätes:

| | |
|---|---|
| Flüssigkeitsmenge: | ca. 25 ml |
| Prüfkörper: | Ring und Rolle, Achsen gekreuzt |
| Gleitgeschwindigkeit: | 1,70 m/sec |
| Testdauer: | 100 Meter Laufstrecke |
| Ring und Rollenmaterial: | Stahl, gehärtet |
| Normallast: | 1000 p Belastungsgewicht |
| Reibungsart: | Gleitreibung |
| Messgrössen: | Abriebfläche in $mm^2$ |

Als Testflüssigkeit für die Wirksamkeit der Additive wurde destilliertes Wasser, bzw. ein Gemisch von 70 % Wasser/ 20 % Monoaethylenglykol/ 10 % Polyäthylenglykol, verwendet.

| Additiv | 1 % Additiv in destilliertem Wasser ($mm^2$) | 2,5 % Additiv in Wasser/Glykol/Polyaethylenglykol ($mm^2$) |
|---|---|---|
| keines | 20,5 | 14,5 |
| 1 | 12,0 | 5,0 |
| 2 | 12,0 | 5,5 |

PATENTANSPRUECHE

1. Verbindungen der Formel (I)

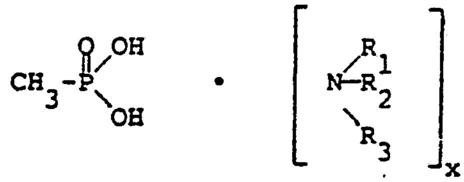

(I)

worin $R_1$ β-Hydroxyäthyl, $R_2$ und $R_3$ unabhängig voneinander Wasserstoff oder β-Hydroxyäthyl und X einen Wert zwischen 1 und 2,2 bedeuten.

2. Verbindungen gemäss Anspruch 1 der Formel (I) worin $R_1$ und $R_2$ β-Hydroxyäthyl, $R_3$ Wasserstoff oder β-Hydroxyäthyl und x einen Wert zwischen 1 und 2,2 bedeuten.

3. Verbindungen gemäss Anspruch 1 der Formel (I) worin X = 2 ist.

4. Verbindungen gemäss Anspruch 1 der Formel (I) worin $R_1$ und $R_2$ β-Hydroxyäthyl, $R_3$ Wasserstoff und x die Zahl 2 bedeuten.

5. Verwendung nach Anspruch 1 von Verbindungen der Formel (I) gemäss Anspruch 1 als Verschleissschutzwirkstoffe und Hochdruckwirkstoffe für wassermischbare Hydraulikflüssigkeiten.

6. Verfahren zur Herstellung von Verbindungen der Formel (I) gemäss Anspruch 1, dadurch gekennzeichnet, dass man Methanphosphonsäure mit Mono-, Di- oder Triäthanolamin umsetzt.

7. Wassermischbare Hydraulikflüssigkeiten gekennzeichnet durch einen Gehalt an einer Verbindung der Formel (I) gemäss Anspruch 1.

0012106

Nummer der Anmeldung

Europäisches Patentamt

# EUROPÄISCHER RECHERCHENBERICHT

EP 79 810 135.8

| EINSCHLÄGIGE DOKUMENTE | | | KLASSIFIKATION DER ANMELDUNG (Int Cl.3) |
|---|---|---|---|
| Kategorie | Kennzeichnung des Dokuments mit Angabe, soweit erforderlich, der maßgeblichen Teile | betrifft Anspruch | |
| A | DE - A - 2 200 661 (TEXACO)<br>-- | | C 07 F 9/38<br>C 10 M 1/44<br>C 10 M 1/32 |
| A | DE - A - 2 065 236 (GLAXO)<br>---- | | |
| | | | RECHERCHIERTE SACHGEBIETE (Int Cl.3) |
| | | | C 07 F 9/38<br>C 10 M 1/32<br>C 10 M 1/44 |
| | | | KATEGORIE DER GENANNTEN DOKUMENTE<br>X: von besonderer Bedeutung<br>A: technologischer Hintergrund<br>O: nichtschriftliche Offenbarung<br>P: Zwischenliteratur<br>T: der Erfindung zugrunde liegende Theorien oder Grundsätze<br>E: kollidierende Anmeldung<br>D: in der Anmeldung angeführtes Dokument<br>L: aus andern Gründen angeführtes Dokument<br>&: Mitglied der gleichen Patentfamilie, übereinstimmendes Dokument |
| X | Der vorliegende Recherchenbericht wurde für alle Patentansprüche erstellt. | | |

| Recherchenort | Abschlußdatum der Recherche | Prüfer |
|---|---|---|
| Berlin | 07-03-1980 | KAPTEYN |